# EUROPEAN PATENT SPECIFICATION

(11) **EP 0 686 167 B1**
(45) Date of publication and mention of the grant of the patent: **08.07.1998**
(21) Application number: 93925001.5
(22) Date of filing: 29.10.1993
(51) Int. Cl.: C08G 65/20, C08G 65/10, C08G 63/82, C08G 63/66

(54) **COPOLYMERIZATION OF TETRAHYDROFURANS AND CYCLIC ANHYDRIDES**
COPOLYMERISATION VON TETRAHYDROFURANEN UND CYCLISCHEN ANHYDRIDEN
COPOLYMERISATION DE TETRAHYDROFURANNES ET D'ANHYDRIDES CYCLIQUES

(30) Priority: 23.02.1993 US 21369
(43) Date of publication of application: 13.12.1995
(73) Proprietor: E.I. DU PONT DE NEMOURS AND COMPANY, Wilmington Delaware 19898 (US)
(72) Inventor: DRYSDALE, Neville, Everton, Newark, DE 19702-1026 (US)
(74) Representative: Jones, Alan John
(86) International application number: US9310140
(87) International publication number: WO9419392

(56) References cited:
- WO-A-88/02661
- US-A- 3 464 958
- US-A- 5 130 470
- CHEMICAL ABSTRACTS, vol. 78, no. 16, 23 April 1973, Columbus, Ohio, US; abstract no. 98454j, 'polyether ester produced by using yttrium catalysts' page 32 ; & JP,A,7 231 438 (UNITIKA CO. LTD) 14 August 1972
- POLYMER LETTERS ED. vol. 14 , 1976 pages 139 - 142 DREYFUSS P. AND KENNEDY J.P. 'graft copolymers by oxonium polyxmerisation'

## Description

### FIELD OF THE INVENTION

This invention concerns a process for the copolymerization of tetrahydrofurans with cyclic carboxylic anhydrides to form a poly(ester-ether), wherein the polymerization is catalyzed by selected metal perfluoroalkylsulfonates.

### BACKGROUND

Copolymers of tetrahydrofuran and cyclic anhydrides are known in the art. These polymers were made with the use of a Lewis acid catalyst such as an organoaluminum compound or an onium compound, optionally in the presence of a cocatalyst, see for example J. Habermeier, et al., J. Polym. Sci., Part C, p. 2131-2141 (1967). No mention is made in this paper of metal perfluoroalkylsulfonates as catalysts.

S. L. Borkowsky, et al., Organometal., vol. 10, p. 1268-1274 (1991) report that certain zirconium complexes can initiate the polymerization of tetrahydrofuran. No mention is made of zirconium perfluoroalkylsulfonates, or of copolymers.

U.S. Patent 3,842,019 describes the polymerization of oxiranes and other small ring compounds by a presumed cationic mechanism, using as the catalyst the decomposition products of metal perfluoroalkylsulfonates. These catalysts are described as "latent", that is no reaction occurs until the metal salt is decomposed. The reactions reported are relatively slow, even at elevated temperatures.

U.S. Patents 5,084,586 and 5,124,417 describe the cationic polymerization of various monomers, including cyclic ethers, using onium cations, whose corresponding anions are fluororalkylsulfatometallates. Onium ion catalyzed cationic polymerizations are well known, and there is no mention in these patents of the use of metal salts not containing onium ions, such as metal triflates, as catalysts for the polymerization of cyclic ethers.

German Patent Application 2,459,163 describes the polymerization of THF using a combination of ferric chloride and carboxylic anhydride as catalyst.

G. A. Olah, et al., J. Appl. Polym. Sci., Vol. 45, 1355-1360 (1992) describe the use of boron, aluminum and gallium tristriflate to catalyze the polymerization of THF.

### SUMMARY OF THE INVENTION

This invention concerns a process for the production of a poly(ester-ether), comprising, contacting one or more cyclic carboxylic anhydrides, one or more tetrahydrofurans, and a catalyst of the formula MZₛ·Qₜ, wherein:
M is a metal selected from cobalt, vanadium, niobium, tungsten, strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, copper, zinc, cadmium, mercury, aluminum, gallium, indium, mischmetall, thulium, germanium, tin, lead, arsenic, antimony and bismuth;
at least one of Z is an anion of the formula ⁻OSO₂R⁵, wherein R⁵ is perfluoroalkyl containing 1 to 12 carbon atoms or part of a fluorinated polymer wherein the carbon atoms alpha and beta to the sulfonate group are together bonded to at least four fluorine atoms, or tetraphenylborate, and the remainder of Z is oxo or one or more monovalent anions;
s is 1 when M is silver;
s is 1 or 2 when M is copper;
s is 2 when M is strontium, barium, cobalt, rhodium, iridium, palladium, platinum, chromium, zinc, cadmium or mercury;
s is 3 when M is scandium, yttrium, a rare earth metal, arsenic, antimony, bismuth, gold, iron, mischmetall, ruthenium, osmium, aluminum, gallium, indium or thulium;
s is 4 when M is titanium, zirconium, hafnium, molybdenum, germanium, tin, or lead;
s is 5 when M is rhenium, vanadium, niobium or tantalum;
s is 6 when M is tungsten;
Q is a neutral ligand;
t is 0 or an integer of 1 to 6; and
provided that each oxo group present counts as two of s.

In a less preferred embodiment an accelerator selected from carboxylic acids whose pKa in water is less than 6, non-cyclic carboxylic anhydrides and acyl halides, may be used in the process.

### DETAILS OF THE INVENTION

In the present process a tetrahydrofuran is copolymerized with a cyclic anhydride to yield a poly(ether-ester). By a tetrahydrofuran (THF) is meant the common meaning, a compound containing a saturated five membered ring in which one of the ring atoms is oxygen and the other four ring atoms are carbon. Preferred tetrahydrofurans have the formula 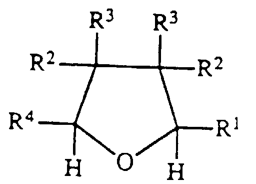 wherein each R¹, R², R³ and R⁴ is independently hydrogen or hydrocarbyl containing 1 to 20 carbon atoms. In especially preferred THFs, R¹, one of R² and all of R³ and R⁴ are hydrogen, and the remaining R² is alkyl containing 1-4 carbon atoms, particularly the remaining R² is methyl. In another especially preferred embodiment all of R¹, R², R³ and R⁴ are hydrogen.

By a cyclic carboxylic anhydride is meant the common meaning, a compound that can be represented by the formula 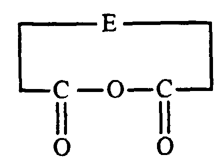 wherein E is a divalent organic radical which is bound to each valence of the carboxylic anhydride group through a carbon atom. In preferred embodiments, E is n-alkylene containing 1 to 4 carbon atoms or alkyl substituted n-alkylene wherein the n-alkylene group contains 1 to 4 carbon atoms, and E contains a total of 2 to 20 carbon atoms. Specific useful cyclic carboxylic anhydrides include, but are not limited to, succinic, maleic, phthalic, 5-methyl-5-nobornene-dicarboxylic acid and 1,2-cyclohexanedicarboxylic acid anhydrides. Preferred cyclic carboxylic anhydrides include maleic, succinic, phthalic and 1,2-cyclohexane-dicarboxylic acid anhydrides.

In the above formula E may be substituted with one or more additional carboxylic anhydride groupings. For instance, 1,2,4,5-benzenetetracarboxylic dianhydride may be used in the process. It is believed that, depending on the concentration of the dianhydride, the resulting copolymer may be branched or even crosslinked (higher dianhydride levels).

It is believed that monovalent anions that are relatively nonnucleophilic are useful as Z. Examples of such anions are tetraphenylborate, ⁻OSO₂R⁵, wherein R⁵ is perfluoroalkyl or wherein R⁵ is part of a fluorinated polymer wherein the carbon atoms alpha and beta to the sulfonate group are together bonded to at least 4 fluorine atoms (as in -CF₂CF₂O₂SO-). It is preferred if R⁵ is perfluoroalkyl, and particularly preferred if R⁵ is trifluoromethyl, so that ⁻OSO₂R⁵ is trifluoromethanesulfonate, herein also called triflate.

The catalyst may be yttrium or rare earth compound of the formula MZ₃ where M is a trivalent ion of yttrium, or one of the rare earths, lanthanum, cerium, praeseodymium, neodymium, promethium, samarium, europium, gadolinium, terbium, dysprosium, holmium, erbium, thulium, ytterbium, and lutetium.

Preferred metals, M, are strontium, scandium yttrium, the rare earth metals, titanium, zirconium, hafnium, vanadium, niobium, tantalum, chromium, molybdenum, tungsten, rhenium, iron, ruthenium, palladium, copper, gold, zinc, tin and bismuth. More preferred metals are yttrium, the rare earth metals, and scandium. Especially preferred metals are yttrium, ytterbium, dysprosium, erbium, neodymium, lanthanum, and scandium. Another preferred metal is "mischmetall" (sometimes also called "didymium"), which is a mixture of rare earth metals as obtained from the ore.

Generally speaking, any metallic compound in which the correct metal in the correct oxidation state (see above) is present and bonded to a triflate or similar anion will be a catalyst. Such a compound must of course be reasonably stable during the polymerization (or depolymerization, see below), or decompose to another compound which is still a triflate (or similar anion) compound of the metal in the correct oxidation state. It has been found that, in general, the greater the number of triflate groups bonded to the metal cation, the more active the metal compound will be as a catalyst. It is preferred if half or more of the anions (Z) bound to each metal cation is triflate or a similar anion.

The metal catalysts may optionally contain one or more neutral ligands coordinated to the metal. By a neutral ligand is meant a neutral compound that can coordinate with the catalysts, usually the metal cation. Neutral ligands include water, and ethers such as dimethyl ether and tetrahydrofuran. Useful compounds containing neutral ligands include bis(n-cyclopentadienyl)tetrahydrofuran-bis(trifluoromethanesulfonato)-zirconium and bis(n-cyclopentadienyl)tetrahydrofuran-bis(trifluoromethanesulfonato)hafnium.

The metals catalysts may contain other anions than triflate and similar anions, and tetrafluoroborate, although at least one of triflate or tetrafluoroborate anions must be present. Some other useful anions are alkoxide, particularly lower alkoxide containing 1-4 carbon atoms, acetylacetonate, cyclopentadieneide, pentamethylcyclopentadieneide, t-butylacetylacetonate, and halide. It is preferred if all of the anions are triflate.

It is believed that in the present process, the higher the ratio of metal catalyst compound to monomers, the lower the molecular weight of the resulting copolymer will be. It is also believed that the copoly r is a random copolymer, except that -O(O)CEC(O)- cannot be adjacent to itself. It is further believed that simple monomers such as THF and, say, succinic or maleic anhydrides, have about an equal propensity to polymerize into the copolymer.

The temperature at which the polymerization process is run is not critical, -80°C to 110°C being a convenient range, 0°C to 110°C is preferred, and 25°C to 65°C is especially preferred. At temperatures above the boiling point of the THF, a pressure vessel may be needed to contain that monomer.

It is preferred to run the polymerization neat, that is in the absence of solvent. However, inert solvents such as ethyl ether or toluene may be present if desired. Mild agitation to keep the process ingredients well mixed is preferred. The polymerization is mildly exothermic and agitation also prevents "hot spots" from forming. If the process temperature increases appreciably, refluxing of a volatile monomer (or solvent) may be used to cool the process. The polymerization may take as long as a day, however, more common times are 1 to 2 hours. It is preferred to run the polymerization under dry (water free) conditions to avoid needless decomposition of the ingredients and/or products, and therefor the ingredients should also preferably be dry. It is convenient to use an inert atmosphere such as dry nitrogen. The polymer may be isolated by removing volatiles by evaporation, of if the polymer is insoluble, by filtration. In general, the catalyst may be removed from the copolymer by washing the copolymer with water. In many cases, the catalyst may be reused in the polymerization.

The molar ratio of the THF to cyclic carboxylic anhydride can be 0.2 to 60, preferably 2 to 15, and most preferably about 5.

The polymerization process may be carried out in a number of ways known to the artisan. It can be done by batch, semibatch and continuous processes. Continuous processes include continuous stirred tank reactor(s) and/or plug flow reactors.

The polymer produced by the instant process contains the repeat units -OCHR¹CR²R³CR²R³CHR⁴- and -O(O)CEC(O)-, wherein the repeat units are randomly incorporated, except that -O(O)CEC(O)- cannot be adjacent to itself. The definitions of R¹, R², R³, R⁴ and E are as given above. The copolymers may be hydrogenated to a polytetrahydrofuran if succinic anhydride is used, or a mixed polyether if another anhydride is used. The copolymers, particularly those containing relatively small amounts of repeat units derived from cyclic carboxylic anhydrides, may also be completely hydrolyzed to polytetrahydrofuran. Such polyethers are useful (usually in their diol form) as monomers for condensation polymers such as polyesters or polyurethanes.

Synthesis of the catalysts used herein are demonstrated by Experiments 1-3 below.

### EXPERIMENT 1

### Preparation of Bis(n-cyclopentadienyl)tetrahydrofuran-bis(trifluoromethanesulfonato)hafnium

In a dry box, hafnocene dichloride (9.93 g) was dissolved in THF (300 mL). To this solution, with stirring, was added a solution of silver triflate (14.12 g) in THF (100 mL). After 10 minutes the precipitated silver chloride was filtered off and the resulting filtrate concentrated to approximately half its volume at reduced pressure. Hexane (250 mL) was added and the resulting mixture placed in the freezer. The resulting precipitate was filtered and then dried under vacuum. Yield: 10.02 g. ¹H NMR (CDCl₃): 6.68 (s, 10 H), 3.76 (m, 4H), 1.84 (m, 4H).

### EXPERIMENT 2

### Preparation of Bis(pentamethyl-n-cyclopentadienyl)-bis(trifluoromethanesulfonato)zirconium

In a dry box, bis(pentamethylcyclopentadienyl)-zirconium dichloride (10.00 g) was dissolved in THF (300 mL). To this solution, with stirring, was added a solution of silver triflate (12.46 g) in THF (100 mL). After 15 minutes the precipitated silver chloride was filtered off and the resulting filtrate concentrated to approximately half its volume at reduced pressure. Hexane (250 mL) was added and the resulting mixture placed in the freezer. The resulting yellow precipitate was filtered and then dried under vacuum. Yield: 6.02 g. ¹H NMR (CDCl₃): 2.12 (s).

### EXPERIMENT 3

### Preparation of Bis(n-cyclopentadienyl)-bis(trifluoromethanesulfonato)vanadium

In a dry box, vanadocene dichloride (5.00 g) was dissolved in THF (300 mL). To this solution, with stirring, was added a solution of silver triflate (11.19 g) in THF (100 mL). After 15 minutes the precipitated silver chloride was filtered off and the resulting filtrate concentrated to approximately half its volume at reduced pressure. Hexane (250 mL) was added and the resulting mixture placed in the freezer. The resulting green precipitate was filtered and then dried under vacuum. Yield: 6.99 g.

In the Examples, the following abbreviations are used:
- GPC -: gel permeation chromatography
- Mn -: number average molecular weight
- Mw -: weight average molecular weight
- PD -: polydispersity, Mw/Mn
- PS -: polystyrene
- RB -: round-bottomed
- THF -: the compound tetrahydrofuran

### EXAMPLE 1

### Yttrium Triflate Catalyzed Copolymerization of Maleic Anhydride and THF

In a dry box, yttrium triflate (1.00 g) and maleic anhydride (2.00 g) were weighed in an oven dried 100 mL RB flask equipped with a stirring bar. The flask was sealed with a rubber septum and removed from the dry box and a nitrogen bleed attached. THF (20 mL) was added via syringe. After 2 hrs. the polymerization was terminated via the addition of water (25 mL) and THF (50 mL), the organic phase was separated, concentrated at reduced pressure and dried under vacuum. Polymer yield: 3.38 g. GPC analysis: Mn = 96800, Mw = 188000, PD = 1.95 (PS STD.). ¹H NMR analysis indicates the THF to anhydride ratio to be ∼15.

### EXAMPLE 2

### Yttrium Triflate Catalyzed Copolymerization of Succinic Anhydride and THF

In a dry box, yttrium triflate (1.00 g) and succinic anhydride (2.00 g) were weighed in an oven dried 100 mL RB flask equipped with a stirring bar. After sealing with a rubber septum the flask was removed from the dry box and a nitrogen bleed attached. THF (20 mL) was added via syringe. After 2 hrs. the polymerization was terminated via the addition of water (25 mL) and THF (50 mL). The resulting organic phase was separated, concentrated at reduced pressure and dried under vacuum. Polymer yield: 5.00 g. GPC analysis: Mn = 80900, Mw = 171000, PD = 2.12 (PS STD.). ¹H NMR analysis indicates the THF to anhydride ratio to be ∼4.5.

### EXAMPLE 3

### Yttrium Triflate Catalyzed Copolymerization of Maleic Anhydride and THF at 40°C

In a dry box, yttrium triflate (1.00 g) and maleic anhydride (3.00 g) were weighed in an oven dried 100 mL RB flask equipped with a stirring bar. After sealing with a rubber septum, the flask was removed from the dry box and a nitrogen bleed attached, the flask was then placed in an oil bath maintained at 40°C. THF (20 mL) was then added via syringe. After 2 hrs. the polymerization was terminated via the addition of water (25 mL), THF (50 mL) and diethyl ether (25 mL) the resulting organic phase was separated, concentrated at reduced pressure and dried under vacuum. Polymer yield: 6.16 g. GPC analysis: Mn = 34800, Mw = 74100, PD = 2.13 (PS STD.).

### EXAMPLE 4

### Yttrium Triflate Catalyzed Copolymerization of Phthalic Anhydride and THF at 40°C

In a dry box, yttrium triflate (1.00 g) and phthalic anhydride (3.00 g) were weighed in an oven dried 100 mL RB flask equipped with a stirring bar. The flask was sealed with a rubber septum and removed from the dry box. A nitrogen purge was attached and the flask placed in an oil bath maintained at 40°C. THF (20 mL) was immediately added and the resulting solution stirred at this temperature for 2 hrs. The polymerization was terminated by the addition of water (25 mL) and THF (50 mL), the resulting organic phase was separated, concentrated at reduced pressure and then dried under vacuum. Polymer yield: 7.04 g. GPC analysis: Mn = 69400, Mw = 128000, PD = 1.85 (PS STD.). ¹H NMR analysis indicates the THF to anhydride ratio to be ∼3.6.

### EXAMPLE 5

### Ytterbium Triflate Catalyzed Copolymerization of Cis-1,2-Cyclohexane-Dicarboxylic Anhydride and THF at 40°C

In a dry box, ytterbium triflate (1.00 g) and cis-1,2-cyclohexanedicarboxylic anhydride (1.5 g) were weighed in an oven dried 100 mL RB flask equipped with a stirring bar. The flask was sealed with a rubber septum and removed from the dry box. A nitrogen purge was attached and the flask placed in an oil bath maintained at 40°C. THF (20 mL) was immediately added and the resulting solution stirred at this temperature for 60 min. The polymerization was terminated by the addition of water (25 mL) and THF (50 mL), the resulting organic phase was separated, concentrated at reduced pressure and then dried under vacuum. Polymer yield: 9.26 g. GPC analysis: Mn = 38100, Mw = 83500, PD = 2.15 (PS STD.).

### EXAMPLE 6

### Yttrium Triflate Catalyzed Copolymerization of Norbornene-2,3-dicarboxylic Anhydride and THF at 40°C

In a dry box, yttrium triflate (1.00 g) and norbornene-2,3-dicarboxylic anhydride (4.0 g, 96%) were weighed in an oven dried 100 mL RB flask equipped with a stirring bar. The flask was sealed with a rubber septum and removed from the dry box. After the attachment of a nitrogen purge THF (20 mL) was added and the resulting solution stirred at room temperature for 60 min. The polymerization was terminated by the addition of water (25 mL) and THF (50 mL), the resulting organic phase was separated, concentrated at reduced pressure and then dried under vacuum. Polymer yield: 5.13 g. GPC analysis: Mn = 52400, Mw = 111000, PD = 2.13 (PS STD.).

### EXAMPLE 7

### Erbium Triflate Catalyzed Copolymerization of Cis-1,2-Cyclohexane-Dicarboxylic Anhydride and THF

In a dry box, erbium triflate (1.00 g) and cis-1,2-cyclohexane-dicarboxylic anhydride (1.5 g) were weighed in an oven dried 100 mL RB flask equipped with a stirring bar. The flask was sealed with a rubber septum and removed from the dry box. A nitrogen purge was attched, THF (20 mL) was immediately added and the resulting solution stirred at room temperature for 120 min. The polymerization was terminated by the addition of water (25 mL) and THF (50 mL), the resulting organic phase was separated, concentrated at reduced pressure and then dried under vacuum. Polymer yield: 3.03 g.

### EXAMPLE 8

### Neodymium Triflate Catalyzed Copolymerization of Cis-1,2-Cyclohexanedicarboxylic Anhydride and THF

In a dry box, neodymium triflate (1.00 g) and cis-1,2-cyclohexanedicarboxylic anhydride (1.5 g) were weighed in an oven dried 100 mL RB flask equipped with a stirring bar. The flask was sealed with a rubber septum and removed from the dry box. A nitrogen purge was attched, THF (20 mL) was immediately added and the resulting solution stirred at room temperature for 120 min. The polymerization was terminated by the addition of water (25 mL) and THF (50 mL), the resulting organic phase was separated, concentrated at reduced pressure and then dried under vacuum. Polymer yield: 1.39 g.

### EXAMPLE 9

### Dysprosium Triflate Catalyzed Copolymerization of Cis-1,2-Cyclohexanedicarboxylic Anhydride and THF

In a dry box, dysprosium triflate (1.00 g) and cis-1,2-cyclohexanedicarboxylic anhydride (1.5 g) were weighed in an oven dried 100 mL RB flask equipped with a stirring bar. The flask was sealed with a rubber septum and removed from the dry box. A nitrogen purge was attched, THF (20 mL) was immediately added and the resulting solution stirred at room temperature for 120 min. The polymerization was terminated by the addition of water (25 mL) and THF (50 mL), the resulting organic phase was separated, concentrated at reduced pressure and then dried under vacuum. Polymer yield: 1.96 g.

### EXAMPLE 10

### Scandium Triflate Catalyzed Copolymerization of Cis-1,2-Cyclohexanedicarboxylic Anhydride and THF

In a dry box, scandium triflate (1.00 g) and cis-1,2-cyclohexanedicarboxylic anhydride (1.5 g) were weighed in an oven dried 100 mL RB flask equipped with a stirring bar. The flask was sealed with a rubber septum and removed from the dry box. A nitrogen purge was attched, THF (20 mL) was immediately added and the resulting solution stirred at room temperature for 120 min. The polymerization was terminated by the addition of water (25 mL) and THF (50 mL), the resulting organic phase was separated, concentrated at reduced pressure and then dried under vacuum. Polymer yield: 1.30 g.

### EXAMPLE 11

### Ytterbium Triflate Catalyzed Copolymerization of Succinic Anhydride, THF and 3-Methyl-THF

In a dry box, ytterbium triflate (2.00 g) and succinic anhydride (2.00 g) were weighed in an oven dried 100 mL RB flask equipped with a stirring bar. After sealing with a rubber septum the flask was removed from the dry box and a nitrogen bleed attached. THF (15.00 mL) and 3-methyl-THF (5.00 mL) were added via syringe. After 2 hrs the polymerization was terminated via the addition of water (25 mL) and THF (50 mL) and ether (25 mL). The resulting organic phase was separated, concentrated at reduced pressure and dried under vacuum. Polymer yield: 4.32 g. GPC analysis (PS STD.) : Mn = 26100, Mw = 43100, PD = 1.65.

### EXAMPLE 12

### Ytterbium Triflate Catalyzed Copolymerization of Succinic Anhydride, THF and 3-Methyl-THF

In a dry box, ytterbium triflate (2.00 g) and succinic anhydride (3.00 g) were weighed in an oven dried 100 mL RB flask equipped with a stirring bar. After sealing with a rubber septum the flask was removed from the dry box and a nitrogen bleed attached. THF (15.00 mL) and 3-methyl-THF (5.00 mL) were added via syringe. After 2 hrs the polymerization was terminated via the addition of water (25 mL) and THF (50 mL) and ether (25 mL). The resulting organic phase was separated, concentrated at reduced pressure and dried under vacuum. Polymer yield: 7.27 g. GPC Analysis (PS STD.) : Mn = 30600, Mw = 52400, PD = 1.71.

### EXAMPLE 13

### Zirconium Triflate Catalyzed Copolymerization of 1,2,4,5-Benzenetetracarboxylic Dianhydride and THF

In a dry box, zirconium triflate (2.00 g) and 1,2,4,5-benzenetetracarboxylic dianhydride (4.00 g) were weighed in an oven dried 100 mL RB flask equipped with a stirring bar. After sealing with a rubber septum the flask was removed from the dry box and a nitrogen bleed attached. THF (20.00 mL) was added via syringe. After 2 hrs the polymerization was terminated via the addition of water (25 mL). The resulting slurry was concentrated at reduced pressure, resulting in a thick viscous material. This material was washed repeatedly with water and then dried under vacuum. Polymer yield: 7.12 g.

### EXAMPLE 14

### Bis(n-cyclopentadienyl)tetrahydrofuran-bis(trifluoromethanesulfonato)zirconium Catalyzed Copolymerization of Maleic Anhydride and THF

In a dry box, bis(n-cyclopentadienyl)tetrahydrofuran-bis(trifluoromethanesulfonato)zirconium (0.50 g) and maleic anhydride (1.00 g) were added an oven dried 100 mL RB flask equipped with a stirring bar. The flask was sealed with a rubber septum and removed from the dry box. After the attachment of a nitrogen bleed THF (10 mL) was added to the flask. After 75 min. the polymerization was terminated via the addition of water (25 mL), THF (50 mL) and ether (25 mL). The resulting organic phase was separated, concentrated at reduced pressure and then dried under vacuum. Polymer yield: 0.73 g. GPC analysis (PS STD.): Mn = 56500, Mw = 71600, PD = 1.27.

### EXAMPLE 15

### Tin Triflate Catalyzed Copolymerization of Cis-1,2-CyclohexaneDicarboxylic Anhydride and THF

In a dry box, tin triflate (1.00 g) and cis-1,2-cyclohexanedicarboxylic anhydride (1.5 g) were weighed in an oven dried 100 mL RB flask equipped with a stirring bar. The flask was sealed with a rubber septum and removed from the dry box. A nitrogen purge was attched, THF (20 mL) was immediately added and the resulting solution stirred at room temperature for 120 min. The polymerization was terminated by the addition of water (25 mL) and THF (50 mL), the resulting organic phase was separated, concentrated at reduced pressure and then dried under vacuum. Polymer yield: 1.41 g.

## Claims

1. A process for the production of a poly(ester-ether), comprising, contacting one or more cyclic carboxylic anhydrides, one or more tetrahydrofurans, and a catalyst of the formula MZₛ^{·}Qₜ, wherein
M is a metal selected from cobalt, vanadium, niobium, tungsten, strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, copper, mischmetall (also referred to as didymium, a mixture of rare earth metals as obtained from the ore), zinc, cadmium, mercury, aluminium, gallium, indium, thulium, germanium, tin, lead, arsenic, antimony and bismuth;
at least one of Z is an anion of the formula ⁻OSO₂R⁵, wherein R⁵ is perfluoroalkyl containing 1 to 12 carbon atoms or part of a fluorinated polymer wherein the carbon atoms alpha and beta to the sulfonate group are together bonded to at least four fluorine atoms, or tetraphenylborate, and the remainder of Z is oxo or one or more monovalent anions;
s is 1 when M is silver;
s is 1 or 2 when M is copper;
s is 2 when M is strontium, barium, cobalt, rhodium, iridium, palladium, platinum, chromium, zinc, cadmium or mercury;
s is 3 when M is scandium, yttrium, a rare earth metal, arsenic, antimony, bismuth, gold, iron, mischmetall, ruthenium, osmium, aluminium, gallium, indium or thulium;
s is 4 when M is titanium, zirconium, hafnium, molybdenum, germanium, tin, or lead;
s is 5 when M is rhenium, vanadium, niobium or tantalum;
s is 6 when M is tungsten;
Q is a neutral ligand;
t is 0 or an integer of 1 to 6; and
provided that each oxo group present counts as two of s.

2. The process as recited in Claim 1 wherein said tetrahydrofuran has the formula 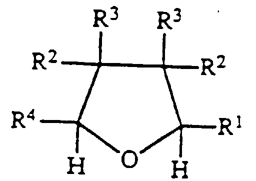 wherein each R¹, R², R³ and R⁴ is independently hydrogen or hydrocarbyl containing 1 to 20 carbon atoms.

3. The process as recited in Claim 2 wherein R¹, one of R², R³, and R⁴ are hydrogen, and remaining R² is alkyl containing 1 to 4 carbon atoms.

4. The process as recited in Claim 3 wherein said remaining R² is methyl.

5. The process as recited in Claim 2 wherein all of R¹, R², R³ and R⁴ are hydrogen.

6. The process as recited in any one of the preceding Claims wherein said cyclic carboxylic anhydride has the formula 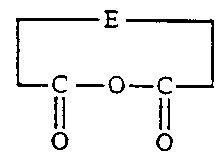 wherein E is a divalent organic radical which is bound to each free valence of the carboxylic anhydride group through a carbon atom.

7. The process as recited in Claim 6 wherein E is n-alkylene containing 1 to 4 carbon atoms or alkyl substituted n-alkylene wherein said n-alkylene group contains 1 to 4 carbon atoms and E contains a total of 2 to 20 carbon atoms.

8. The process as recited in any one of the preceding Claims wherein said anhydride is selected from succinic, maleic, phthalic, 5-methyl-5-nobornene-dicarboxylic acid and 1,2-cyclohexanedicarboxylic acid anhydrides.

9. The process as recited in Claim 8 wherein said anhydride is selected from maleic, succinic, phthalic and 1,2-cyclohexane-dicarboxylic acid anhydrides.

10. The process as recited in any one of the preceding Claims wherein M is a metal selected from strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, zinc, cadmium, mercury, germanium, tin, lead, arsenic, antimony and bismuth.

11. The process as recited in any one of Claims 1 to 9 wherein M is strontium, scandium, yttrium, the rare earth metals, titanium, zirconium, hafnium, vanadium, niobium, tantalum, chromium, molybdenum, tungsten, rhenium, iron, ruthenium, palladium, copper, gold, zinc, tin, bismuth or mischmetall.

12. The process as recited in any one of the preceding Claims wherein all of Z is an anion of the formula ⁻OSO₂R⁵, and wherein R⁵ is trifluoromethyl.

13. The process as recited in any one of the preceding Claims wherein said process is carried out at a temperature of about -80°C to about 110°C.

14. The process as recited in Claim 13 wherein said temperature is 0°C to 110°C.

15. The process as recited in Claim 14 wherein said temperature is 25°C to 65°C.

16. The process as recited in any one of the preceding Claims carried out in the absence of solvent.

17. The process as recited in any one of the preceding Claims wherein the molar ratio of said tetrahydrofuran to said cyclic carboxylic anhydride is about 0.2 to 60.

18. The process as recited in Claim 17 wherein said ratio is 2 to 15.

19. The process as recited in Claim 18 wherein said ratio is about 5.

## Patentansprüche

1. Verfahren zur Herstellung eines Poly(esterethers), welches das In-Kontakt-Bringen von einem oder mehreren cyclischen Carbonsäureanhydriden, einem oder mehreren Tetrahydrofuranen und einem Katalysator der Formel MZₛ•Qₜ umfaßt, wobei
M ein Metall ist, ausgewählt aus Cobalt, Vanadium, Niobium, Wolfram, Strontium, Barium, Scandium, Yttrium, den Seltenerdmetallen, Titan, Zirkonium, Hafnium, Chrom, Molybdän, Tantal, Rhenium, Eisen, Ruthenium, Osmium, Rhodium, Iridium, Palladium, Platin, Silber, Gold, Kupfer, Mischmetall (auch als Didymium bezeichnet, eine wie aus dem Erz erhaltene Mischung aus Seltenerdmetallen), Zink, Cadmium, Quecksilber, Aluminium, Gallium, Indium, Thulium, Germanium, Zinn, Blei, Arsen, Antimon und Bismuth;
mindestens eines der Z ein Anion der Formel ⁻OSO₂R⁵, wobei R⁵ ein 1 bis 12 Kohlenstoffatome enthaltendes Perfluoralkyl oder ein Teil eines fluorierten Polymeren ist, wobei die alpha- und beta-Kohlenstoffatome der Sulfonatgruppe zusammen mit mindestens vier Fluoratomen verbunden sind, oder Tetraphenylborat ist, und die restlichen Z Oxo- oder ein oder mehrere einwertige Anionen sind;
s gleich 1 ist, wenn M gleich Silber ist;
s gleich 1 oder 2 ist, wenn M gleich Kupfer ist;
s gleich 2 ist, wenn M gleich Strontium, Barium, Cobalt, Rhcdium, Iridium, Palladium, Platin, Chrom, Zink, Cadmium oder Quecksilber ist;
s gleich 3 ist, wenn M gleich Scandium, Yttrium, ein Seltenerdmetall, Arsen, Antimon, Bismuth, Gold, Eisen, Mischmetall, Ruthenium, Osmium, Aluminium, Gallium, Indium oder Thulium ist;
s gleich 4 ist, wenn M gleich Titan, Zirkonium, Hafnium, Molybdän, Germanium, Zinn oder Blei ist;
s gleich 5 ist, wenn M gleich Rhenium, Vanadium, Niobium oder Tantal ist;
s gleich 6 ist, wenn M gleich Wolfram ist;
Q ein neutraler Ligand ist;
t gleich 0 oder eine ganze Zahl von 1 bis 6 ist; und
vorausgesetzt wird, daß jede vorhandene Oxogruppe als zwei s zählt.

2. Verfahren gemäß Anspruch 1, wobei das Tetrahydrofuran die Formel 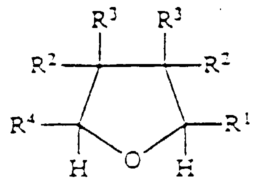 besitzt, wobei jedes R¹, R², R³ und R⁴ unabhängig Wasserstoff oder ein Kohlenwasserstoffrest mit 1 bis 20 Kohlenstoffatomen ist.

3. Verfahren gemäß Anspruch 2, wobei R¹, einer von R², R³ und R⁴ Wasserstoff sind, und das verbleibende R² Alkyl ist, welches 1 bis 4 Kohlenstoffatome enthält.

4. Verfahren gemäß Anspruch 3, wobei das verbleibende R² Methyl ist.

5. Verfahren gemäß Anspruch 2, wobei alle R¹, R², R³ und R⁴ Wasserstoff sind.

6. Verfahren gemäß einem der vorhergehenden Ansprüche, wobei das cyclische Carbonsäureanhydrid die Formel 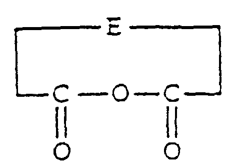 besitzt, wobei E ein zweiwertiger organischer Rest ist, welcher über ein Kohlenstoffatom mit jeder freien Valenz der Carbonsäureanhydridgruppe verbunden ist.

7. Verfahren gemäß Anspruch 6, wobei E ein n-Alkylen, welches 1 bis 4 Kohlenstoffatome enthält, oder ein Alkylsubstituiertes n-Alkylen ist, wobei die n-Alkylengruppe 1 bis 4 Kohlenstoffatome enthält und E insgesamt 2 bis 20 Kohlenstoffatome enthält.

8. Verfahren gemäß einem der vorhergehenden Ansprüche, wobei das Anhydrid ausgewählt ist aus Bernsteinsäure-, Maleinsäure-, Phthalsäure-, 5-Mezhyl-5-norbornendicarbonsäure- und 1,2-Cyclohexandicarbonsäureanhydriden.

9. Verfahren gemäß Anspruch 8, wobei das Anhydrid ausgewählt ist aus Maleinsäure-, Bernsteinsäure-, Phthalsäure-, und 1,2-Cyclohexandicarbonsäureanhydriden.

10. Verfahren gemäß einem der vorhergehenden Ansprüche, wobei M ein Metall ist, ausgewählt aus Strontium, Barium, Scandium, Yttrium, den Seltenerdmetallen, Titan, Zirkonium, Hafnium, Chrom, Molybdän, Tantal, Rhenium, Eisen, Ruthenium, Osmium, Rhodium, Iridium, Palladium, Platin, Silber, Gold, Zink, Cadmium, Quecksilber, Germanium, Zinn, Blei, Arsen, Antimon und Bismuth.

11. Verfahren gemäß einem der Ansprüche 1 bis 9, wobei M gleich Strontium, Scandium, Yttrium, die Seltenerdmetalle, Titan, Zirkonium, Hafnium, Vanadium, Niobium, Tantal, Chrom, Molybdän, Wolfram, Rhenium, Eisen, Ruthenium, Palladium, Kupfer, Gold, Zink, Zinn, Bismuth oder Mischmetall ist.

12. Verfahren gemäß einem der vorhergehenden Ansprüche, wobei alle Z ein Anion der Formel ⁻OSO₂R⁵ sind, und wobei R⁵ gleich Trifluormethyl ist.

13. Verfahren gemäß einem der vorhergehenden Ansprüche, wobei das Verfahren bei einer Temperatur von ungefähr -80°C bis ungefähr 110°C durchgeführt wird.

14. Verfahren gemäß Anspruch 13, wobei die Temperatur 0°C bis 110°C beträgt.

15. Verfahren gemäß Anspruch 14, wobei die Temperatur 25°C bis 65°C beträgt.

16. Verfahren gemäß einem der vorhergehenden Ansprüche, welches in Abwesenheit eines Lösungsmittels durchgeführt wird.

17. Verfahren gemäß einem der vorhergehenden Ansprüche, wobei das Molverhältnis des Tetrahydrofurans zu dem cyclischen Carbonsäureanhydrid ungefähr 0,2 bis 60 beträgt.

18. Verfahren gemäß Anspruch 17, wobei das Verhältnis 2 bis 15 beträgt.

19. Verfahren gemäß Anspruch 18, wobei das Verhältnis ungefähr 5 beträgt.

## Revendications

1. Procédé de production d'un poly(ester-éther), comprenant la mise en contact d'un ou plusieurs anhydrides carboxyliques cycliques, d'un ou plusieurs tétrahydrofurannes, et d'un catalyseur de formule MZₛ·Qₜ, dans laquelle
M est un métal choisi parmi le cobalt, le vanadium, le niobium, le tungstène, le strontium, le baryum, le scandium, l'yttrium, les métaux des terres rares, le titane, le zirconium, l'hafnium, le chrome, le molybdène, le tantale, le rhénium, le fer, le ruthénium, l'osmium, le rhodium, l'iridium, le palladium, le platine, l'argent, l'or, le cuivre, le mischmétal (également désigné sous le nom de didyme, un mélange de métaux des terres rares tel qu'obtenu à partir du minerai), le zinc, le cadmium, le mercure, l'aluminium, le gallium, l'indium, le thulium, le germanium, l'étain, le plomb, l'arsenic, l'antimoine et le bismuth;
au moins un des Z est un anion de formule ⁻OSO₂R⁵, dans laquelle R⁵ est un groupe perfluoroalkyle contenant 1 à 12 atomes de carbone ou une partie d'un polymère fluoré dans lequel les atomes de carbone en alpha et bêta du groupe sulfonate sont liés ensemble à au moins quatre atomes de fluor, ou tétraphénylborate, et le reste des Z est un groupe oxo ou un ou plusieurs anions monovalents;
s vaut 1 quand M est l'argent;
s vaut 1 ou 2 quand M est le cuivre;
s vaut 2 quand M est le strontium, le baryum, le cobalt, le rhodium, l'iridium, le palladium, le platine, le chrome, le zinc, le cadmium ou le mercure;
s vaut 3 quand M est le scandium, l'yttrium, un métal des terres rares, l'arsenic, l'antimoine, le bismuth, l'or, le fer, le mischmétal, le ruthénium, l'osmium, l'aluminium, le gallium, l'indium ou le thulium;
s vaut 4 quand M est le titane, le zirconium, l'hafnium, le molybdène, le germanium, l'étain, ou le plomb;
s vaut 5 quand M est le rhénium, le vanadium, le niobium ou le tantale;
s vaut 6 quand M est le tungstène;
Q est un ligand neutre;
t vaut 0 ou est un nombre entier entre 1 et 6; et
à condition que chaque groupe oxo présent compte comme deux des s.

2. Procédé selon la revendication 1 dans lequel ledit tétrahydrofuranne répond à la formule 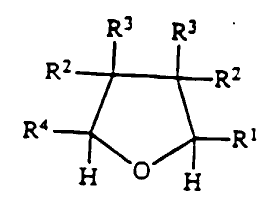 dans laquelle chaque R¹, R², R³ et R⁴ est indépendamment un atome d'hydrogène ou un groupe hydrocarbyle contenant 1 à 20 atomes de carbone.

3. Procédé selon la revendication 2 dans lequel R¹, un des R², R³, et R⁴ sont des atomes d'hydrogène, et le R² restant est un groupe alkyle contenant 1 à 4 atomes de carbone.

4. Procédé selon la revendication 3 dans lequel ledit R² restant est un groupe méthyle.

5. Procédé selon la revendication 2 dans lequel tous les R¹, R², R³ et R⁴ sont des atomes d'hydrogène.

6. Procédé selon l'une quelconque des revendications précédentes dans lequel ledit anhydride carboxylique cyclique répond à la formule 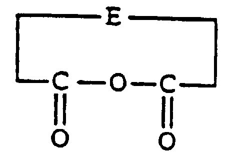 dans laquelle E est un radical organique divalent qui est lié à chaque valence libre du groupement anhydride carboxylique par l'intermédiaire d'un atome de carbone.

7. Procédé selon la revendication 6 dans lequel E est un n-alkylène contenant 1 à 4 atomes de carbone ou un n-alkylène substitué par un alkyle dans lequel ledit groupe n-alkylène contient 1 à 4 atomes de carbone et E contient un total de 2 à 20 atomes de carbone.

8. Procédé selon l'une quelconque des revendications précédentes dans lequel ledit anhydride est choisi parmi les anhydrides succinique, maléique, phtalique, l'anhydride d'acide 5-méthyl-5-norbornène-dicarboxylique et les anhydrides d'acides 1,2-cyclohexane-dicarboxyliques.

9. Procédé selon la revendication 8 dans lequel ledit anhydride est choisi parmi les anhydrides maléique, succinique, phtalique et les anhydrides d'acides 5-méthyl-5-norbornène-dicarboxyliques.

10. Procédé selon l'une quelconque des revendications précédentes dans lequel M est un métal choisi parmi le strontium, le baryum, le scandium, l'yttrium, les métaux des terres rares, le titane, le zirconium, l'hafnium, le chrome, le molybdène, le tantale, le rhénium, le fer, le ruthénium, l'osmium, le rhodium, l'iridium, le palladium, le platine, l'argent, l'or, le zinc, le cadmium, le mercure, le germanium, l'étain, le plomb, l'arsenic, l'antimoine et le bismuth.

11. Procédé selon l'une quelconque des revendications 1 à 9 dans lequel M est le strontium, le scandium, l'yttrium, les métaux des terres rares, le titane, le zirconium, l'hafnium, le vanadium, le niobium, le tantale, le chrome, le molybdène, le tungstène, le rhénium, le fer, le ruthénium, le palladium, le cuivre, l'or, le zinc, l'étain, le bismuth ou le mischmétal.

12. Procédé selon l'une quelconque des revendications précédentes dans lequel chaque Z est un anion de formule ⁻OSO₂R⁵, R⁵ étant un groupe trifluorométhyle.

13. Procédé selon l'une quelconque des revendications précédentes, ledit procédé étant mis en oeuvre à une température d'environ -80°C à environ 110°C.

14. Procédé selon la revendication 13 dans lequel ladite température est comprise entre 0°C et 110°C.

15. Procédé selon la revendication 14 dans lequel ladite température est comprise entre 25°C et 65°C.

16. Procédé selon l'une quelconque des revendications précédentes mis en oeuvre en l'absence de solvant.

17. Procédé selon l'une quelconque des revendications précédentes dans lequel le rapport molaire dudit tétrahydrofuranne audit anhydride carboxylique cyclique est d'environ 0,2 à 60.

18. Procédé selon la revendication 17 dans lequel ledit rapport est compris entre 2 et 15.

19. Procédé selon la revendication 18 dans lequel ledit rapport vaut environ 5.
